# EUROPEAN PATENT APPLICATION

(11) **EP 4 442 337 A1**
(43) Date of publication of application: **09.10.2024**
(21) Application number: 24164827.8
(22) Date of filing: 20.03.2024
(51) Int. Cl.: A63F 13/235, A63F 13/54, A63F 13/95, A63H 5/00

(54) **SYSTEM AND METHOD FOR PLAYING AN AUDIO GAME**

(30) Priority: 22.03.2023 EP 23163521
(71) Applicant: Ohrlaf GmbH, 87634 Obergünzburg (DE)
(72) Inventor: WIMMER, Kilian, 87634 Obergünzburg (DE)
(74) Representative: Stellbrink & Partner Patentanwälte mbB

(57) **Abstract**

The present invention relates to a tag configured for use with an audio playback device, wherein the tag comprises data related, at least in part, to an audio track and/or data related to a relationship condition, an audio playback device configured to send playable data to a speaker, wherein the audio playback device is configured to receive data related, at least in part, to an audio track, a system for playing an audio game comprising an audio playback device configured to send playable data to a speaker, wherein the system is configured to receive first data related to a first audio track, to play, by means of the speaker, the first audio track, and, to prompt for second data related to an audio track, and to a method therefor.

## Description

### Field

The present invention relates generally to the field of games. More particularly, it relates to a system and a method for playing audio games.

### Background

Games have been around for as long as recorded history. The form and complexity of games may have evolved over the years. Yet, they remain a central activity in most people's daily lives. Games provide a way to present friendly or competitive challenges between people. With the advent of modern-day computing, however, it has also become possible for people to engage themselves in games with a computer. A relevant consideration in playing computer games may be the ability to interact with the computer. In young children, games may provide a fun and engaging way to learn and develop skills. They may be of particular advantage for very young children who cannot read or talk but can listen or differentiate colors.

A number of games have thus been developed that aim to provide a fun learning experience to very young children. In particular, the widespread use of smartphones with their vast application stores have allowed people to download games suitable for children of any age. One disadvantage of smartphone games, however, is their visual aspect, that may lead to distractions. Visual stimuli may dominate in interactions with a smartphone and may hamper the learning experience. Consequently, there has recently been a surge in audio-only media suitable for children.

DE 10 201400075 A1 relates to an apparatus for executing software with a processor capable of executing the software and a sensor capable of detecting a property or a change in a characteristic of that environment within a region of its environment, and a control unit executing the processor. The software may control the software if the sensor detects within the area of its environment a certain property or change of a property of that environment or if the control unit detects a certain change in the property detected by the sensor, even if it has not yet been stored in the device before the sensor has detected a property or change in a property of that environment within a region of its environment.

While the solution presented in the prior art is useful, it also has some disadvantages. A particularly relevant disadvantage may be the lack of interaction with a user.

### Summary

The present invention seeks to overcome or at least alleviate the shortcomings and disadvantages of the prior art. More particularly, it is an object of the present invention to provide a system and a method for playing audio games.

According to a first aspect, the present invention relates to a tag configured to be used with an audio playback device, the tag comprising data related, at least in part, to an audio track and/or data related to a relationship condition. Using a tag may be advantageous as a tag may provide haptic feedback and may represent a simple and easy way to provide data to the audio playback device. Further, the tag may be shaped in different ways, such as animal shapes, that may further add to the user experience.

The tag may comprise a memory unit configured to store the data related to an audio track and/or the data related to a relationship condition. A size of the memory unit may be chosen in accordance with a size of the data related to an audio track and/or a size of the data related to a relationship condition. Preferably, the tag may only comprise data related to an audio track or data related to a relationship condition. However, in some embodiments, the tag may comprise both the data related to an audio track and the data related to a relationship condition.

The data related to an audio track/a relationship condition may comprise an identifier. The identifier may comprise any string of alphanumeric characters. The identifier may be unique for each tag, and for each data related to an audio track and/or data related to a relationship condition.

The tag may comprise data related, at least in part, to a plurality of audio tracks. This may be of advantage in reducing the complexity of the system as described further below.

The plurality of audio tracks may comprise a first track and a second track.

The second track may be related to the first track.

The tag may comprise a tag communication unit configured to communicate with a reader. The reader may be configured significantly complementary to the tag. For example, the tag may comprise an NFC tag and the reader may comprise an NFC reader.

The tag communication unit may be configured to communicate with the reader by means of electromagnetic radiation. Thus, for example, the communication between the reader and the tag may be wireless. However, in embodiments, the communication may also be mediated by a wired connection, such as via a USB connection, or by connecting a cable between the tag and the reader.

A frequency of the electromagnetic radiation may be between 5 and 100 MHz, preferably between 8 and 50 MHz, further preferably between 10 and 30 MHz.

The tag communication unit may be configured to communicate with the memory unit. This may be of advantage in allowing the tag to send data stored in the memory unit to a reader, for example.

The tag may comprise an active tag or a passive tag. An active tag may be understood to comprise a tag that may regularly send out signals to allow discovery by a reader. As may be appreciated, the active tag may have to be provided with a source of energy. Preferably, the tag may comprise a passive tag configured to be discovered by signals sent by a reader.

The tag may be configured, in response to receiving a request from a reader, to send the data related to an audio track and/or the data related to a relationship condition.

In response to receiving the request from a reader, the tag communication unit may be configured to retrieve the data related to an audio track and/or the data related to a relationship condition from the memory unit.

The tag may comprise a housing. As described above, the shape of the housing may be chosen to further improve the user experience. For example, the shape of the housing may correspond to a cartoon character.

The memory unit may be configured to be housed inside the housing.

The tag communication unit may be configured to be housed inside the housing.

A maximum extension of the housing in any dimension may be between 2 and 20 cm, preferably between 5 and 15 cm, further preferably between 8 and 12 cm.

A minimum extension of the housing in any dimension may be between 1 and 10 cm, preferably between 2 and 8 cm, further preferably between 3 and 5 cm.

The housing may comprise a substantially planar housing such that an extension of the housing in one dimension is significantly lesser than an extension of the housing in any of the two other dimensions.

A ratio of a minimum extension of the housing in any dimension to a maximum extension of the housing in any dimension may be between 0.05 and 0.75, preferably between 0.07 and 0.5, further preferably between 0.1 and 0.3.

The housing may comprise any of plastic, rubber, cloth, fabric, metal, steel, wood, leather, and recycled plastic.

According to a second aspect, the present invention relates to a speaker configured to receive playable data from an audio playback device, wherein the speaker is further configured to play the playable data.

The speaker may be configured to receive the playable data from a device data processing unit of the audio playback device.

An output power of the speaker may be between 2 and 30 W, preferably between 3 and 25 W, further preferably between 5 and 15 W.

According to a third aspect, the present invention relates to an audio playback device configured to send playable data to a speaker, wherein the audio playback device may be configured to receive data related, at least in part, to an audio track. The data related to an audio track may comprise any of an identifier associated with the audio track, a snippet of the audio track, or the whole audio track. It may be understood that whenever the data related to an audio track comprises an identifier, the audio track associated with the identifier may be retrieved by the audio playback device.

The audio playback device may be configured to receive data related, at least in part, to a relationship condition. The data related to a relationship condition may comprise any of an identifier associated with the relationship condition, or the relationship condition itself. The relationship condition may be defined, for example, by a look-up list that may list, for each data element associated with an audio track, a data element associated with a related audio track. Alternatively, or additionally, the relationship condition may comprise a relationship function that may accept as an input a data element associated with an audio track and return another data element associated with an audio track or return null, for example. It may be understood that whenever the data related to a relationship condition comprises an identifier, the relationship condition (look-up list or relationship function) associated with the identifier may be retrieved by the audio playback device. Further details are described below.

The data related to an audio track may comprise, at least in part, an identifier associated with the audio track. An advantage of storing the identifier may be the consumption of less memory, thus allowing a simpler system.

The data related to a relationship condition may comprise an identifier. An advantage of storing the identifier may be the consumption of less memory, thus allowing a simpler system.

The audio playback device may comprise a data reception component configured to receive the data related to an audio track and/or the data related to a relationship condition.

The data reception component may be configured to receive any of the identifiers described above.

The data reception component may be configured to receive the data related to an audio track and/or the data related to a relationship condition from a tag comprising the data related to an audio track and/or the data related to a relationship condition. As described above, the use of a tag may provide a simple, easy method of providing data to the audio playback device.

The tag may comprise a tag as described above.

The data reception component may comprise an RFID reader. An RFID reader may be of particular advantage when the tag comprises an RFID tag.

The data reception component may comprise an NFC reader. An NFC reader may be of particular advantage when the tag comprises an NFC tag.

The audio playback device may comprise a device data processing unit. The device data processing unit may be configured for various data processing tasks as described below. A capacity of the device data processing unit may be chosen based, at least in part, on a complexity of the processing tasks carried out by the device data processing unit.

The device data processing unit may be configured to communicate with the data reception component. Thus, the device data processing unit may receive data from and/or send data to the data reception component. For example, the device data processing unit may be configured to verify data received by the data reception component for completeness. Then, the device data processing unit may receive data from the data reception component, process it, and then send a notification of the result of the verification. Further, the device data processing unit may send activation/de-activation data to the data reception component.

The device data processing unit may be configured to send the playable data to the speaker. The device data processing unit may be configured to generate, if needed, the playable data. For example, the speaker may be configured to accept playable data in a defined format, and the device data processing unit may be configured to generate the playable data in the defined format.

The device data processing unit may further send control data to the speaker. This may be of advantage in allowing control of a volume of the speaker, for example.

The device data processing unit may be configured to activate the data reception component to enable receiving the data related to an audio track and/or the data related to a relationship condition.

The audio playback device may comprise a user interface component. The user interface component may allow a user to interact with the device. Preferably, the user interface component does not comprise a display to eliminate visual interactions.

The user interface component may be configured to send data to the device data processing unit. This may be of advantage in allowing the audio playback device to be controlled by the user.

The user interface component may comprise a button.

The button may comprise a rotatable knob. A rotation of the knob may result in a variation of a volume of the speaker. For example, the user interface component may send data representing a position of the rotatable knob to the device data processing unit, that may in turn send control data to the speaker.

In other embodiments, the button may comprise a slider that may be slid to change a volume of the speaker.

The button may comprise a push button.

The push button may be configured, in response to being pushed, to activate the device data processing unit.

The user interface component may comprise a plurality of buttons.

The plurality of buttons may comprise two buttons.

At least one of the two buttons may comprise a push button.

Each of the two buttons may comprise a push button.

Each of the two buttons may be configured to control a volume of the speaker.

A first button may be configured to decrease the volume of the speaker.

A second button may be configured to increase the volume of the speaker.

In response to being pushed simultaneously, the two buttons as described above may be configured to activate the device data processing unit. Activation/de-activation of the device data processing unit may allow changing a state of the audio playback device. For example, the device may be reset by pushing on the two buttons simultaneously. Additionally, long-pressing the two buttons simultaneously may switch the device on/off.

However, other options are also possible for allowing resetting/switching the device on/off.

The device data processing unit may be configured, in response to being activated, to send to the speaker playable data representing activation of the device data processing unit. This may be of advantage in informing a user that the audio playback device is ready for use.

The user interface component may be configured to receive data from the device data processing unit.

The user interface component may comprise an LED. The user interface component may comprise a plurality of LEDs. The data received from the device data processing unit may relate to activation of at least one LED. Thus, for example, one or more LEDs may light up to represent the switching on of the device.

The user interface component may be configured to toggle a state of the audio playback device.

The user interface component may be configured to allow a user to reset a state of the device.

The audio playback device may be configured to communicate with an external device.

The audio playback device may comprise a device communication unit configured to communicate with the external device. Thus, the audio playback device may send and/or receive data from the external device. The connection between the audio playback device and the external device may comprise a wireless or a wired connection.

The device data processing unit may be configured to communicate with the device communication unit. This may allow the device data processing unit to control the data sent and/or received from the external device. In particular, the device data processing unit may verify the data for completeness, for example.

The audio playback device may comprise a device memory unit.

The device data processing unit may be configured to communicate with the device memory unit.

The device memory unit may be configured to store a track database.

The track database may be configured to store a data element associated with an audio track. The data element may, generally, comprise data similar to the data associated with an audio track. However, in some embodiments, the data element may comprise data that is significantly different from the data related to an audio track. For example, to enhance security, it may be desirable to use a different, possibly encrypted, identifier for the data element from an identifier in the data related to an audio track.

The data element may, however, be compared with the data related to the audio track such that a result of the comparison is one of success, representing a correspondence between the data element and the data related to an audio track, or failure, representing a lack of correspondence between the data element and the data related to an audio track.

The track database may be configured to store the audio track associated with the data element. Thus, the track database may be understood to allow a correspondence between a data element associated with an audio track, and the associated audio track.

The track database may be configured to store a plurality of data elements, each associated with a distinct audio track.

The track database may be configured to store each of a plurality of audio tracks associated with each of the plurality of data elements.

A first of the plurality of data elements, that may be called a first data element, may be related to a second of the plurality of data elements, that may be called a second data element.

The track database may be configured to store the relationship between the first and the second data elements. Storing the relationship may comprise, for example, storing a look-up list that may comprise two columns - a left column may comprise the first data element and a corresponding entry in a right column may comprise the second data element. Thus, by looking at the data element in the left column, a data element related to the data element in the left column may be determined from the right column. Absence of the first data element in the left column may indicate that there is no related data element to the first data element.

Alternatively, or additionally, the relationship may be stored by means of a relationship function, that may, for example, take as input the first data element and return the second data element or null, if no related data element exists.

The relationship between the first and the second data elements may comprise a symmetric relationship such that the first data element is related to the second data element and the second data element is related to the first data element.

The relationship between the first and the second data elements may comprise an asymmetric relationship such that the second data element is related to the first data element but the first data element is not related to the second data element.

The relationship between the first and the second data elements may comprise a conditional relationship such that the relationship exists only when a relationship condition is satisfied.

The device memory unit may be configured to store a relationship database comprising a data element associated with the relationship condition. The data element associated with a relationship condition may comprise any of an identifier for the relationship condition, or the relationship condition itself. For example, it may comprise an identifier that may be used to retrieve a look-up list or a relationship function corresponding to the relationship condition as described above. Or, it may comprise the look-up list or the relationship function itself.

The relationship database may comprise a plurality of data elements each associated with a distinct relationship condition.

The audio playback device may comprise the speaker. This may be of advantage in allowing a compact system.

The speaker may be external to the audio playback device. This may be of advantage in allowing any speaker to be connected to the audio playback device. For example, headphones/earphones may be connected. Or, a speaker of a desired sound quality may be connected.

The speaker may comprise a speaker as described above.

The device data processing unit may be configured to compare the data related to an audio track with a data element associated with an audio track. As described above, this may be achieved by means of a function provided to the device data processing unit.

The device data processing unit may be configured to compare the data related to a relationship condition with a data element associated with a relationship condition. As described above, this may be achieved by means of a function provided to the device data processing unit.

The speaker may be configured to receive playable data from an audio playback device as described above.

The tag may be used with an audio playback device as described above.

According to a fourth aspect, the present invention relates to an external device comprising an external communication unit, wherein the external device may be configured to communicate with an audio playback device. The external device may communicate with an audio playback device as described above. An external device may be of advantage in distributing some of the functions of the audio playback device. This may allow the audio playback device to be made simpler and easier to use. Further, a storage (processing) capacity of the device memory unit (device data processing unit) may be lowered making the audio playback device lighter and less energy-consuming.

The external device may comprise any of a (remote) computer, a (remote) server, a laptop, a tablet, a smartphone, or any other known data processing system.

Communication between the external device and the audio playback device may be wireless or wired.

The external device may comprise an external data processing unit.

The external data processing unit may be configured to communicate with the external communication unit.

The external device may comprise an external memory unit.

The external data processing unit may be configured to communicate with the external memory unit.

The external memory unit may be configured to store a track database.

The track database may be configured to store a data element associated with an audio track. The data element associated with an audio track may be similar to the data element associated with an audio track described above.

The track database may be configured to store the audio track associated with the data element.

The track database may be configured to store a plurality of data elements, each associated with a distinct audio track.

The track database may be configured to store each of a plurality of audio tracks associated with each of the plurality of data elements.

A first of the plurality of data elements, that may be called a first data element, may be related to a second of the plurality of data elements, that may be called a second data element.

The track database may be configured to store the relationship between the first and the second data elements.

The relationship between the first and the second data elements may comprise a symmetric relationship such that the first data element is related to the second data element and the second data element is related to the first data element.

The relationship between the first and the second data elements may comprise an asymmetric relationship such that the second data element is related to the first data element but the first data element is not related to the second data element.

The relationship between the first and the second data elements may comprise a conditional relationship such that the relationship exists only when a relationship condition is satisfied.

The external memory unit may be configured to store a relationship database comprising a data element associated with the relationship condition. The data element associated with a relationship condition may be similar to the data element associated with a relationship condition described above.

The relationship database may comprise a plurality of data elements each associated with a distinct relationship condition.

The external data processing unit may be configured to compare the data related to an audio track with a data element associated with an audio track. The comparison may be made similarly to as described above.

The external data processing unit may be configured to compare the data related to a relationship condition with a data element associated with a relationship condition. The comparison may be made similarly to as described above.

According to a fifth aspect, the present invention relates to a system for playing an audio game, the system comprising an audio playback device configured to send playable data to a speaker, wherein the system is configured: to receive first data related to a first audio track, to play, by means of the speaker, the first audio track, and, to prompt for second data related to an audio track. In the following, whenever reference is made to "the audio track", the audio track related to the second data is meant.

The audio playback device may comprise an audio playback device as described above.

The speaker may comprise a speaker as described above.

The system may comprise an external device as described above.

The system may be configured to further receive data related to a relationship condition. The system may be configured to receive a tag comprising the data related to a relationship condition.

The system may be configured to receive a tag comprising the first (the second) data related to a first (an) audio track.

The tag may comprise a tag as described above.

The system may be configured to receive the second data related to the audio track.

The system may be configured to determine if the audio track is related to the first audio track. The system may be configured to carry out this determination based, at least in part, on the data related to a relationship condition.

A result of the determination may be one of success, corresponding to the audio track being related to the first audio track, or failure, corresponding to the audio track not being related to the first audio track.

The system may be configured, in response to the result being success, to play the audio track.

The system is configured, in response to receiving the data related to a relationship condition, to prompt for the first data related to a first audio track.

The device data processing unit may be configured to activate the data reception component, and wherein the data reception component may be configured, in response to being activated by the device data processing unit, to receive the data related to a relationship condition.

The device data processing unit may be configured to send to the speaker playable data representing activation of the data reception component.

The data reception component may be configured to send the data received to the device data processing unit.

The device data processing unit may be configured, in response to receiving the data from the data reception component, to de-activate the data reception component.

The device data processing unit may be configured to verify the data received from the data reception component.

A result of the verification may be one of success or failure. Success may correspond to the data being suitable for further processing, whereas failure may correspond to the data being unsuitable for further processing.

The device data processing unit may be configured to send to the speaker playable data representative of the result of the verification.

The device data processing unit may be configured, in response to the result of the verification being failure, to activate the data reception component to enable receiving the data related to a relationship condition again.

In response to the result of the verification being success, the device data processing unit may compare the data related to a relationship condition with each data element associated with a relationship condition stored in the device memory unit.

A result of the comparison may be one of success or failure.

The device data processing unit may be configured to send to the speaker playable data representative of the result.

The device data processing unit may be configured, in response to the result being success, to prompt for the first data.

The device data processing unit may be configured to prompt for the first data, at least in part, by activating the data reception component to receive the first data.

The data reception component may be configured to send the received first data to the device data processing unit.

The device data processing unit may be configured to compare the first data with each data element associated with an audio track stored in the device memory unit.

A result of the comparison may be one of success or failure.

The device data processing unit may be configured to send to the speaker playable data representing the result of the comparison.

In response to the result being success, the device data processing unit may be configured, to determine a first data element, the first data element being the data element comparing successfully with the first data.

Further, in response to the result being success, the device data processing unit may be configured, to determine a second data element related to the first data element.

The second data element may be determined based, at least in part, on the relationship condition.

The device data processing unit may be configured to query a state of the device communication unit.

The state of the device communication unit may be one of active, corresponding to being connected to the external device, or inactive, corresponding to being disconnected from the external device.

The system may be configured, in response to the device communication unit being active, to check for updates to the audio playback device.

The system may be configured to download updates to the audio playback device, if available.

The device data processing unit may be configured, in response to the result of the comparison of the data related to a relationship condition described above being failure and the device communication unit being active, to send the data related to a relationship condition to the external device, particularly to the external data processing unit thereof.

The external data processing unit may be configured to receive the data related to a relationship condition and to compare it with each of the data elements associated with a relationship condition stored in the external memory unit.

A result of the comparison may be one of success or failure.

The audio playback device may be configured to receive the first data related to a first audio track.

The audio playback device may be configured to send the first data to the external device, particularly to the external data processing unit thereof.

The external data processing unit may be configured to receive the first data and compare it with each of the data elements associated with an audio track stored in the external memory unit.

A result of the comparison may be one of success or failure.

In response to the result being success, the external data processing unit may be configured, to determine a first data element, the first data element being the data element comparing successfully with the first data.

Further, in response to the result being success, the external data processing unit may be configured, to determine a second data element related to the first data element.

The second data element may be determined based, at least in part, on the relationship condition.

The external data processing unit may be configured to send the second data element to the audio playback device, particularly to the device data processing unit thereof.

The external device may be further configured to send the audio tracks associated with the first data element and the second data element. This may allow the audio playback device to play these audio tracks. The audio tracks may be stored, for example, in the device memory unit.

The external data processing unit may be configured, in response to the result of any of the comparisons described above being failure, to send a failure notification to the audio playback device.

The audio playback device may be configured to send to the speaker playable data representing the failure notification received from the external device.

The device data processing unit may be configured, in response to the result of local comparison of the first data described above being success, to prompt for the second data.

The device data processing unit may be configured, in response to receiving the second data element from the external device as described above, to prompt for the second data.

The device data processing unit may be configured to prompt for the second data, at least in part, by activating the data reception component.

The data reception component may be configured to receive second data related to an audio track and to send the received second data to the device data processing unit.

The device data processing unit may be configured to compare the received second data to the second data element.

A result of the comparison may be one of success or failure.

The device data processing unit may be configured to send to the speaker playable data representing the result of the comparison.

The device data processing unit may be configured, in response to the result being failure, to again prompt for the second data.

The device data processing unit may be configured, in response to the result being success, to play the audio track associated with the second data element.

The device data processing unit may be configured, in response to the result being success, to prompt for new first data relating to a first audio track.

The device data processing unit may be configured, in response to the result being success, to prompt for new data relating to a relationship condition.

Prompting for data may comprise sending to the speaker playable data representing the prompt.

The audio playback device may be configured to retrieve the audio track corresponding to the data element associated with an audio track from the device memory unit and/or the external memory unit.

According to a sixth aspect, the present invention relates to a method for playing an audio game using an audio playback device configured to send playable data to a speaker, wherein the method comprises: receiving first data related to a first audio track, playing, by means of the speaker, the first audio track, and, prompting for second data related to an audio track.

The audio playback device may comprise an audio playback device as described above.

The speaker may comprise a speaker as described above.

The method may comprise the audio playback device sending data to an external device as described above.

The method further may comprise receiving data related to a relationship condition.

The method may comprise receiving the second data.

The method may comprise determining if the audio track is related to the first audio track.

Determining if the audio track is related to the first audio track may be based, at least in part, on the data related to a relationship condition described above.

The method may comprise receiving a tag comprising the first (the second) data related to a first (an) audio track.

The method may comprise receiving a tag comprising the data related to a relationship condition.

The tag may comprise a tag as described above.

The method may comprise comparing the data related to a relationship with a data element associated with a relationship condition.

The method may comprise comparing the first (the second) data related to a first (an) audio track with a data element associated with an audio track.

The method may comprise comparing the second data with a data element determined based, at least in part, on the first data and the data related to a relationship condition.

The method may comprise receiving the second data related to an audio track.

The system may be configured to perform the method as described above.

The present invention is also described by the following numbered embodiments.

Below tag embodiments will be discussed. These are abbreviated by the letter "T" followed by a number. Whenever reference is herein made to the tag embodiments, the following embodiments are meant.

T1. A tag configured for use with an audio playback device, wherein the tag comprises data related, at least in part, to an audio track and/or data related, at least in part, to a relationship condition.

T2. The tag according to the preceding embodiment, wherein the tag comprises a memory unit configured to store the data related to an audio track and/or the data related to a relationship condition.

T2.1. The tag according to any of the 2 preceding embodiments, wherein the data related to an audio track/a relationship condition comprises an identifier.

T2.2. The tag according to any of the preceding tag embodiments, wherein the tag comprises data related, at least in part, to a plurality of audio tracks.

T2.3. The tag according to the preceding embodiment, wherein the plurality of audio tracks comprises a first track and a second track.

T2.4. The tag according to the preceding embodiment, wherein the second track is related to the first track.

T2.5. The tag according to any of the preceding tag embodiments, wherein the tag comprises a tag communication unit configured to communicate with a reader.

T2.6. The tag according to the preceding embodiment, wherein the tag communication unit is configured to communicate with the reader by means of electromagnetic radiation.

T2.7. The tag according to the preceding embodiment, wherein a frequency of the electromagnetic radiation is between 5 and 100 MHz, preferably between 8 and 50 MHz, further preferably between 10 and 30 MHz.

T2.8. The tag according to any of the 3 preceding embodiments and with the features of embodiment T2, wherein the tag communication unit is configured to communicate with the memory unit.

T3. The tag according to any of the preceding tag embodiments, wherein the tag comprises an active tag.

T4. The tag according to any of the preceding tag embodiments but without the features of the preceding embodiment, wherein the tag comprises a passive tag.

T5. The tag according to the preceding embodiment, wherein the tag is configured, in response to receiving a request from a reader, to send the data related to an audio track and/or the data related to a relationship condition.

T5.1. The tag according to the preceding embodiment and with the features of embodiment T2.5, wherein, in response to receiving the request from a reader, the tag communication unit is configured to retrieve the data related to an audio track and/or the data related to a relationship condition from the memory unit.

T6. The tag according to any of the preceding tag embodiments, wherein the tag comprises a housing.

T7. The tag according to the preceding embodiment and with the features of embodiment T2, wherein the memory unit is configured to be housed inside the housing.

T8. The tag according to any of the 2 preceding embodiments and with the features of embodiment T2.5, wherein the tag communication unit is configured to be housed inside the housing.

T9. The tag according to any of the 3 preceding embodiments, wherein a maximum extension of the housing in any dimension is between 2 and 20 cm, preferably between 5 and 15 cm, further preferably between 8 and 12 cm.

T10. The tag according to any of the 4 preceding embodiments, wherein a minimum extension of the housing in any dimension is between 1 and 10 cm, preferably between 2 and 8 cm, further preferably between 3 and 5 cm.

T11. The tag according to any of the 5 preceding embodiments, wherein the housing comprises a substantially planar housing such that an extension of the housing in one dimension is significantly lesser than an extension of the housing in any of the two other dimensions.

T12. The tag according to any of the 6 preceding embodiments, wherein a ratio of a minimum extension of the housing in any dimension to a maximum extension of the housing in any dimension is between 0.05 and 0.75, preferably between 0.07 and 0.5, further preferably between 0.1 and 0.3.

T13. The tag according to any of the preceding tag embodiments and with the features of embodiment T7, wherein the housing comprises any of plastic, rubber, cloth, fabric, metal, steel, wood, leather, and recycled plastic.

Below speaker embodiments will be discussed. These are abbreviated by the letter "L" followed by a number. Whenever reference is herein made to the speaker embodiments, the following embodiments are meant.

L1. A speaker configured to receive playable data from an audio playback device, wherein the speaker is further configured to play the playable data.

L2. The speaker according to the preceding embodiment, wherein the speaker is configured to receive the playable data from a device data processing unit of the audio playback device.

L3. The speaker according to any of the preceding speaker embodiments, wherein an output power of the speaker is between 2 and 30 W, preferably between 3 and 25 W, further preferably between 5 and 15 W.

Below device embodiments will be discussed. These are abbreviated by the letter "D" followed by a number. Whenever reference is herein made to the device embodiments, the following embodiments are meant.

D1. An audio playback device configured to send playable data to a speaker, wherein the audio playback device is configured to receive data related, at least in part, to an audio track.

D1.1. The audio playback device according to the preceding embodiment, wherein the audio playback device is configured to receive data related, at least in part, to a relationship condition.

D2. The audio playback device according to the preceding embodiment, wherein the data related to an audio track comprises, at least in part, an identifier associated with the audio track.

D2.1. The audio playback device according to any of the 2 preceding embodiments, wherein the data related to a relationship condition comprises an identifier.

D3. The audio playback device according to any of the 3 preceding embodiments, wherein the audio playback device comprises a data reception component configured to receive the data related to an audio track and/or the data related to a relationship condition.

D4. The audio playback device according to the preceding embodiment and with the features of any of the embodiments D2, and D2.1, wherein the data reception component is configured to receive the identifier.

D5. The audio playback device according to any of the preceding device embodiments and with the features of embodiment D3, wherein the data reception component is configured to receive the data related to an audio track and/or the data related to a relationship condition from a tag comprising the data related to an audio track and/or the data related to a relationship condition.

D6. The audio playback device according to the preceding embodiment, wherein the tag comprises a tag according to any of the preceding tag embodiments.

D7. The audio playback device according to any of the 4 preceding embodiments, wherein the data reception component comprises an RFID reader.

D8. The audio playback device according to any of the 5 preceding embodiments, wherein the data reception component comprises an NFC reader.

D9. The audio playback device according to any of the preceding device embodiments, wherein the audio playback device comprises a device data processing unit.

D10. The audio playback device according to the preceding embodiment and with the features of embodiment D3, wherein the device data processing unit is configured to communicate with the data reception component.

D10.1.The audio playback device according to any of the 2 preceding embodiments, wherein the device data processing unit is configured to send the playable data to the speaker.

D11. The audio playback device according to any of the preceding device embodiments and with the features of embodiment D10, wherein the device data processing unit is configured to activate the data reception component to enable receiving the data related to an audio track and/or the data related to a relationship condition.

D12. The audio playback device according to any of the preceding device embodiments, wherein the audio playback device comprises a user interface component.

D13. The audio playback device according to the preceding embodiment and with the features of embodiment D9, wherein the user interface component is configured to send data to the device data processing unit.

D14. The audio playback device according to any of the 2 preceding embodiments, wherein the user interface component comprises a button.

D15. The audio playback device according to the preceding embodiment, wherein the button comprises a rotatable knob.

D16. The audio playback device according to the preceding embodiment, wherein a rotation of the knob results in a variation of a volume of the speaker.

D17. The audio playback device according to any of the 3 preceding embodiments, wherein the button comprises a push button.

D18. The audio playback device according to the preceding embodiment and with the features of embodiment D13, wherein the push button is configured, in response to being pushed, to activate the device data processing unit.

D19. The audio playback device according to any of the preceding device embodiments and with the features of embodiment D14, wherein the user interface component comprises a plurality of buttons.

D20. The audio playback device according to the preceding embodiment, wherein the plurality of buttons comprises two buttons.

D21. The audio playback device according to the preceding embodiment, wherein at least one of the two buttons comprises a push button.

D22. The audio playback device according to the preceding embodiment, wherein each of the two buttons comprises a push button.

D23. The audio playback device according to any of the 3 preceding embodiments, wherein each of the two buttons is configured to control a volume of the speaker.

D24. The audio playback device according to the preceding embodiment, wherein a first button is configured to decrease the volume of the speaker.

D25. The audio playback device according to the preceding embodiment, wherein a second button is configured to increase the volume of the speaker.

D26. The audio playback device according to any of the preceding device embodiments and with the features of embodiment D22, wherein the two buttons are configured, in response to being pushed simultaneously, to activate the device data processing unit.

D27. The audio playback device according to any of the preceding device embodiments and with the features of embodiments D10.1, and any of the embodiments D18, and D26, wherein the device data processing unit is configured, in response to being activated, to send to the speaker playable data representing activation of the device data processing unit.

D28. The audio playback device according to any of the preceding device embodiments and with the features of embodiments D9, and D12, wherein the user interface component is configured to receive data from the device data processing unit.

D29. The audio playback device according to any of the preceding device embodiments and with the features of embodiment D12, wherein user interface component comprises an LED.

D30. The audio playback device according to the preceding embodiment, wherein the user interface component comprises a plurality of LEDs.

D31. The audio playback device according to any of the 2 preceding embodiments and with the features of embodiment D28, wherein the data received from the device data processing unit relates to activation of at least one LED.

D31.1. The audio playback device according to any of the preceding device embodiments and with the features of embodiment D12, wherein the user interface component is configured to toggle a state of the audio playback device.

D31.2. The audio playback device according to any of the preceding device embodiments and with the features of embodiment D12, wherein the user interface component is configured to allow a user to reset a state of the device.

D32. The audio playback device according to any of the preceding device embodiments, wherein the audio playback device is configured to communicate with an external device.

D33. The audio playback device according to the preceding embodiment, wherein the audio playback device comprises a device communication unit configured to communicate with the external device.

D34. The audio playback device according to the preceding embodiment and with the features of embodiment D9, wherein the device data processing unit is configured to communicate with the device communication unit.

D35. The audio playback device according to any of the preceding device embodiments, wherein the audio playback device comprises a device memory unit.

D36. The audio playback device according to the preceding embodiment and with the features of embodiment D9, wherein the device data processing unit is configured to communicate with the device memory unit.

D37. The audio playback device according to any of the 2 preceding embodiments, wherein the device memory unit is configured to store a track database.

D38. The audio playback device according to the preceding embodiment, wherein the track database is configured to store a data element associated with an audio track.

D39. The audio playback device according to the preceding embodiment, wherein the track database is configured to store the audio track associated with the data element.

D40. The audio playback device according to any of the 2 preceding embodiments, wherein the track database is configured to store a plurality of data elements, each associated with a distinct audio track.

D41. The audio playback device according to any of the 2 preceding embodiments, wherein the track database is configured to store each of a plurality of audio tracks associated with each of the plurality of data elements.

D42. The audio playback device according to any of the 2 preceding embodiments, wherein a first of the plurality of data elements, that may be called a first data element, is related to a second of the plurality of data elements, that may be called a second data element.

D43. The audio playback device according to the preceding embodiment, wherein the track database is configured to store the relationship between the first and the second data elements.

D44. The audio playback device according to the preceding embodiment, wherein the relationship between the first and the second data elements comprises a symmetric relationship such that the first data element is related to the second data element and the second data element is related to the first data element.

D45. The audio playback device according to the preceding embodiment, wherein the relationship between the first and the second data elements comprises an asymmetric relationship such that the second data element is related to the first data element but the first data element is not related to the second data element.

D46. The audio playback device according to any of the preceding audio playback device embodiments and with the features of embodiment D42, wherein the relationship between the first and the second data elements comprises a conditional relationship such that the relationship exists only when a relationship condition is satisfied.

D47. The audio playback device according to the preceding embodiment, wherein the device memory unit is configured to store a relationship database comprising a data element associated with the relationship condition.

D47.1.The audio playback device according to the preceding embodiment, wherein the relationship database comprises a plurality of data elements each associated with a distinct relationship condition.

D48. The audio playback device according to any of the preceding device embodiments, wherein the audio playback device comprises the speaker.

D49. The audio playback device according to any of the preceding device embodiments, but without the features of the preceding embodiment, wherein the speaker is external to the audio playback device.

D50. The audio playback device according to any of the 2 preceding embodiments, wherein the speaker comprises a speaker according to any of the preceding speaker embodiments.

D51. The audio playback device according to any of the preceding device embodiments and with the features of embodiments D9, and D38, wherein the device data processing unit is configured to compare the data related to an audio track with a data element associated with an audio track.

D52. The audio playback device according to any of the preceding device embodiments and with the features of embodiments D9, and D47, wherein the device data processing unit is configured to compare the data related to a relationship condition with a data element associated with a relationship condition.

L4. The speaker according to any of the preceding speaker embodiments, wherein the audio playback device comprises an audio playback device according to any of the preceding device embodiments.

T17. The tag according to any of the preceding tag embodiments, wherein the audio playback device comprises an audio playback device according to any of the preceding device embodiments.

Below external device embodiments will be discussed. These are abbreviated by the letter "E" followed by a number. Whenever reference is herein made to the external device embodiments, the following embodiments are meant.

E1. An external device comprising an external communication unit, wherein the external device is configured to communicate with an audio playback device.

E2. The external device according to the preceding embodiment, wherein the external device comprises an external data processing unit.

E3. The external device according to the preceding embodiment, wherein the external data processing unit is configured to communicate with the external communication unit.

E4. The external device according to any of the preceding external device embodiments, wherein the external device comprises an external memory unit.

E5. The external device according to the preceding embodiment and with the features of embodiment E2, wherein the external data processing unit is configured to communicate with the external memory unit.

E6. The external device according to any of the 2 preceding embodiments, wherein the external memory unit is configured to store a track database.

E7. The external device according to the preceding embodiment, wherein the track database is configured to store a data element associated with an audio track.

E8. The external device according to the preceding embodiment, wherein the track database is configured to store the audio track associated with the data element.

E9. The external device according to any of the 2 preceding embodiments, wherein the track database is configured to store a plurality of data elements, each associated with a distinct audio track.

E10. The external device according to any of the 2 preceding embodiments, wherein the track database is configured to store each of a plurality of audio tracks associated with each of the plurality of data elements.

E11. The external device according to any of the 2 preceding embodiments, wherein a first of the plurality of data elements, that may be called a first data element, is related to a second of the plurality of data elements, that may be called a second data element.

E12. The external device according to the preceding embodiment, wherein the track database is configured to store the relationship between the first and the second data elements.

E13. The external device according to the preceding embodiment, wherein the relationship between the first and the second data elements comprises a symmetric relationship such that the first data element is related to the second data element and the second data element is related to the first data element.

E14. The external device according to the preceding embodiment, wherein the relationship between the first and the second data elements comprises an asymmetric relationship such that the second data element is related to the first data element but the first data element is not related to the second data element.

E15. The external device according to any of the preceding external device embodiments and with the features of embodiment E11, wherein the relationship between the first and the second data elements comprises a conditional relationship such that the relationship exists only when a relationship condition is satisfied.

E16. The external device according to the preceding embodiment, wherein the external memory unit is configured to store a relationship database comprising a data element associated with the relationship condition.

E16.1. The external device according to the preceding embodiment, wherein the relationship database comprises a plurality of data elements each associated with a distinct relationship condition.

E16.2. The external device according to any of the preceding external device embodiments and with the features of embodiments E2, and E7, wherein the external data processing unit is configured to compare the data related to an audio track with a data element associated with an audio track.

E16.3. The external device according to any of the preceding external device embodiments and with the features of embodiments E2, and E16, wherein the external data processing unit is configured to compare the data related to a relationship condition with a data element associated with a relationship condition.

E17. The external device according to any of the preceding external device embodiments, wherein the audio playback device comprises an audio playback device according to any of the preceding device embodiments.

Below system embodiments will be discussed. These are abbreviated by the letter "S" followed by a number. Whenever reference is herein made to the system embodiments, the following embodiments are meant.

S1. A system for playing an audio game comprising an audio playback device configured to send playable data to a speaker, wherein the system is configured:
to receive first data related to a first audio track,
to play, by means of the speaker, the first audio track, and,
to prompt for second data related to an audio track.

S2. The system according to the preceding embodiment, wherein the audio playback device comprises an audio playback device according to any of the preceding device embodiments.

S3. The system according to any of the preceding system embodiments, wherein the speaker comprises a speaker according to any of the preceding speaker embodiments.

S4. The system according to any of the preceding system embodiments, wherein the system comprises an external device according to any of the preceding external device embodiments.

S5. The system according to any of the preceding system embodiments, wherein the system is configured to further receive data related to a relationship condition.

S6. The system according to any of the preceding system embodiments, wherein the system is configured to receive a tag comprising the first (the second) data related to a first (an) audio track.

S7. The system according to any of the preceding system embodiments and with the features of embodiment S5, wherein the system is configured to receive a tag comprising the data related to a relationship condition.

S8. The system according to any of the 2 preceding embodiments, wherein the tag comprises a tag according to any of the preceding tag embodiments.

S8.1. The system according to any of the preceding system embodiments, wherein the system is configured to receive the second data.

S9. The system according to the preceding embodiment, wherein the system is configured to determine if the audio track is related to the first audio track.

S10. The system according to the preceding embodiment and with the features of embodiment S5, wherein determining if the audio track is related to the first audio track is based, at least in part, on the data related to a relationship condition.

S10.1. The system according to any of the 2 preceding embodiments, wherein a result of the determination is one of success, corresponding to the audio track being related to the first audio track, or failure, corresponding to the audio track not being related to the first audio track.

S10.2. The system according to the preceding embodiment, wherein the system is configured, in response to the result being success, to play the audio track.

S11. The system according to any of the preceding system embodiments and with the features of embodiment S5, wherein the system is configured, in response to receiving the data related to a relationship condition, to prompt for the first data related to a first audio track.

S12. The system according to any of the preceding system embodiments and with the features of embodiments S2, and S5, wherein the device data processing unit is configured to activate the data reception component, and wherein the data reception component is configured, in response to being activated by the device data processing unit, to receive the data related to a relationship condition.

S13. The system according to the preceding embodiment, wherein the device data processing unit is configured to send to the speaker playable data representing activation of the data reception component.

S14. The system according to any of the 2 preceding embodiments, wherein the data reception component is configured to send the data received to the device data processing unit.

S15. The system according to the preceding embodiment, wherein the device data processing unit is configured, in response to receiving the data from the data reception component, to de-activate the data reception component.

S16. The system according to any of the 2 preceding embodiments, wherein the device data processing unit is configured to verify the data received from the data reception component.

S17. The system according to the preceding embodiment, wherein a result of the verification is one of success or failure.

S18. The system according to the preceding embodiment, wherein the device data processing unit is configured to send to the speaker playable data representative of the result of the verification.

S19. The system according to any of the preceding system embodiments and with the features of embodiment S12, wherein the device data processing unit is configured, in response to the result of the verification being failure, activating the data reception component to enable receiving the data related to a relationship condition again.

S20. The system according to any of the 3 preceding embodiments, wherein the device data processing unit is configured, in response to the result being success, to compare the data related to a relationship condition with each data element associated with a relationship condition stored in the device memory unit.

S21. The system according to the preceding embodiment, wherein a result of the comparison is one of success or failure.

S22. The system according to the preceding embodiment, wherein the device data processing unit is configured to send to the speaker playable data representative of the result.

S23. The system according to any of the 2 preceding embodiments and with the features of embodiment S11, wherein the device data processing unit is configured, in response to the result being success, to prompt for the first data.

S24. The system according to the preceding embodiment, wherein the device data processing unit is configured to prompt for the first data, at least in part, by activating the data reception component to receive the first data.

S25. The system according to the preceding embodiment, wherein the data reception component is configured to send the received first data to the device data processing unit.

S26. The system according to the preceding embodiment, wherein the device data processing unit is configured to compare the received first data with each data element associated with an audio track stored in the device memory unit.

S27. The system according to the preceding embodiment, wherein a result of the comparison is one of success or failure.

S28. The system according to the preceding embodiment, wherein the device data processing unit is configured to send to the speaker playable data representing the result of the comparison.

S29. The system according to any of the 2 preceding embodiments, wherein the device data processing unit is configured, in response to the result being success, to determine a first data element, the first data element being the data element comparing successfully with the received first data.

S29.1. The system according to the preceding embodiment, wherein the device data processing unit is configured to determine a second data element related to the first data element.

S29.2. The system according to the preceding embodiment, wherein the second data element is determined based, at least in part, on the relationship condition.

S30. The system according to any of the preceding system embodiments and with the features of embodiment S2, wherein the device data processing unit is configured to query a state of the device communication unit.

S31. The system according to the preceding embodiment and with the features of embodiment S4, wherein the state of the device communication unit is one of active, corresponding to being connected to the external device, or inactive, corresponding to being disconnected from the external device.

S32. The system according to the preceding embodiment, wherein the system is configured, in response to the device communication unit being active, to check for updates to the audio playback device.

S33. The system according to the preceding embodiment, wherein the system is configured to download updates to the audio playback device, if available.

S34. The system according to any of the 3 preceding embodiments and with the features of embodiment S21, wherein the device data processing unit is configured, in response to the result being failure and the device communication unit being active, to send the data related to a relationship condition to the external device, particularly to the external data processing unit thereof.

S35. The system according to the preceding embodiment, wherein the external data processing unit is configured to receive the data related to a relationship condition and to compare it with each of the data elements associated with a relationship condition stored in the external memory unit.

S36. The system according to the preceding embodiment, wherein a result of the comparison is one of success or failure.

S37. The system according to any of the 3 preceding embodiments, wherein the audio playback device is configured to receive the first data related to a first audio track.

S38. The system according to the preceding embodiment, wherein the audio playback device is configured to send the received first data to the external device, particularly to the external data processing unit thereof.

S39. The system according to the preceding embodiment, wherein the external data processing unit is configured to receive the first data.

S39.1. The system according to the preceding embodiment and with the features of embodiment S36, wherein the system is configured, in response to the result of the comparison being success, to compare the received first data with each of the data elements associated with an audio track stored in the external memory unit.

S40. The system according to the preceding embodiment, wherein a result of the comparison is one of success or failure.

S41. The system according to the preceding embodiment, wherein the external data processing unit is configured, in response to the result of the comparison being success, to determine a first data element, the first data element being the data element comparing successfully with the received first data.

S41.1. The system according to the preceding embodiment, wherein the external data processing unit is configured to determine a second data element associated with the first data element.

S41.2. The system according to the preceding embodiment, wherein the second data element is determined based, at least in part, on the relationship condition.

S42. The system according to the preceding embodiment, wherein the external data processing unit is configured to send the second data element to the audio playback device, particularly to the device data processing unit thereof.

S42.1. The system according to any of the preceding system embodiments and with the features of embodiment S36, wherein the external data processing unit is configured, in response to the result being failure, to send a failure notification to the audio playback device.

S42.2. The system according to any of the preceding system embodiments and with the features of embodiment S40, wherein the external data processing unit is configured, in response to the result being failure, to send a failure notification to the audio playback device.

S42.3. The system according to any of the 2 preceding embodiments, wherein the audio playback device is configured to send to the speaker playable data representing the failure notification received from the external device.

S43. The system according to any of the preceding system embodiments and with the features of embodiment S27, wherein the device data processing unit is configured, in response to the result being success, to prompt for the second data.

S43.1. The system according to any of the 2 preceding embodiments, wherein the device data processing unit is configured, in response to receiving the second data element, to prompt for the second data.

S44. The system according to any of the 2 preceding embodiments, wherein the device data processing unit is configured to prompt for the second data, at least in part, by activating the data reception component.

S45. The system according to the preceding embodiment, wherein the data reception component is configured to receive second data related to an audio track and to send the received second data to the device data processing unit.

S46. The system according to the preceding embodiment and with the features of embodiment S29, wherein the device data processing unit is configured to compare the received second data to the second data element.

S47. The system according to the preceding embodiment, wherein a result of the comparison is one of success or failure.

S48. The system according to the preceding embodiment, wherein the device data processing unit is configured to send to the speaker playable data representing the result of the comparison.

S49. The system according to any of the 2 preceding embodiments, wherein the device data processing unit is configured, in response to the result being failure, to again prompt for the second data.

S50. The system according to any of the 3 preceding embodiments, wherein the device data processing unit is configured, in response to the result being success, to play the audio track associated with the second data element.

S51. The system according to any of the 4 preceding embodiments, wherein the device data processing unit is configured, in response to the result being success, to prompt for new first data relating to a first audio track.

S52. The system according to any of the 5 preceding embodiments, wherein the device data processing unit is configured, in response to the result being success, to prompt for new data relating to a relationship condition.

S53. The system according to any of the preceding system embodiments, wherein prompting for data comprises sending to the speaker playable data representing the prompt.

S54. The system according to any of the preceding system embodiments, wherein the audio playback device is configured to retrieve the audio track corresponding to a data element associated with an audio track from the device memory unit and/or the external memory unit.

Below method embodiments will be discussed. These are abbreviated by the letter "M" followed by a number. Whenever reference is herein made to the method embodiments, the following embodiments are meant.

M1. A method for playing an audio game using an audio playback device configured to send playable data to a speaker, wherein the method comprises:
receiving first data related to a first audio track,
playing, by means of the speaker, the first audio track, and,
prompting for second data related to an audio track.

M2. The method according to the preceding embodiment, wherein the audio playback device comprises an audio playback device according to any of the preceding device embodiments.

M3. The method according to any of the preceding method embodiments, wherein the speaker comprises a speaker according to any of the preceding speaker embodiments.

M4. The method according to any of the preceding method embodiments, wherein the method comprises the audio playback device sending data to an external device according to any of the preceding external device embodiments.

M5. The method according to any of the preceding method embodiments, wherein the method further comprises receiving data related to a relationship condition.

M5.1. The method according to any of the preceding method embodiments, wherein the method comprises receiving the second data.

M5.2. The method according to the preceding embodiment, wherein the method comprises determining if the audio track is related to the first audio track.

M5.3. The method according to the preceding embodiment and with the features of the penultimate embodiment, wherein determining if the audio track is related to the first audio track is based, at least in part, on the data related to a relationship condition.

M6. The method according to any of the preceding method embodiments, wherein the method comprises receiving a tag comprising the first (the second) data related to a first (an) audio track.

M7. The system according to any of the preceding method embodiments and with the features of embodiment M5, wherein the method comprises receiving a tag comprising the data related to a relationship condition.

M8. The method according to any of the 2 preceding embodiments, wherein the tag comprises a tag according to any of the preceding tag embodiments.

M9. The method according to any of the preceding method embodiments and with the features of embodiment M5, wherein the method comprises comparing the data related to a relationship with a data element associated with a relationship condition.

M10. The method according to any of the preceding method embodiment, wherein the method comprises comparing the first (the second) data related to a first (an) audio track with a data element associated with an audio track.

M11. The method according to the preceding embodiment, wherein the method comprises comparing the second data with a data element determined based, at least in part, on the first data and the data related to a relationship condition.

M12. The method according to any of the preceding method embodiments, wherein the method comprises receiving the second data related to an audio track.

S55. The system according to any of the preceding system embodiments, wherein the system is configured to perform the method according to any of the preceding method embodiments.

### Brief Description of Figures

- Figure 1: depicts a first embodiment of a system for playing an audio game;
- Figure 2: depicts a second embodiment of a system for playing an audio game; and
- Figure 3: depicts a side view of an audio playback device for playing an audio game.

### Detailed Description of Figures

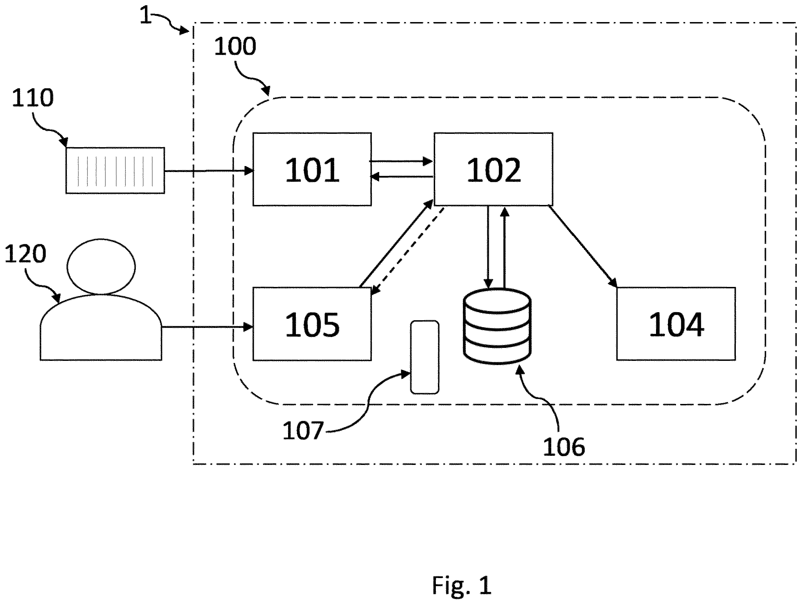

Figure 1 depicts a first embodiment of a system 1 configured for playing an audio game. The audio game may generally comprise a first audio track and a second audio track such that the second audio track may have to be played in response to the first track having been played. For example, the first audio track may comprise a question, such as "What's the sound made by a cat?" and the second audio track may comprise a recording of a cat meowing. Generally, it may be understood that the second audio track may be related to the first audio track in an audio game.

The relationship between the first audio track and the second audio track may be symmetric, such that the first and the second audio tracks are related to each other. This may be of particular advantage in playing a game such as audio memory, wherein an objective of the game may be to match a previously played audio track. In such cases, the first audio track may be significantly identical to the second audio track.

Alternatively, or additionally, the relationship may be asymmetric, such that the second audio track is related to the first audio track but not the other way round. For example, in the example described above of a cat and its sound, the audio track comprising the recording of the cat meowing may be related to the audio track comprising the question, but the audio track comprising the question may not be related to the audio track comprising the recording of the cat meowing. This may be of advantage in establishing different roles (question, solution) of the audio tracks in the audio game as described further below. As may be appreciated, the first audio track may be significantly different from the second audio track in these cases.

Additionally, the relationship may be conditional, such that the relationship may only exist when a relationship condition is satisfied. Thus, for example, based on a first relationship condition a first "second" (quotes added here for better readability) audio track may be related to a "first" audio track, and based on a second relationship condition, a second "second" audio track may be related to a "first" audio track. For example, the first relationship condition may comprise "recording" and the second audio track related to a first audio track "What's the sound made by a cat?" may comprise a recording of a cat meowing, as described above. Alternatively, the second relationship condition may comprise "name" and the second audio track may comprise an audio track corresponding to "purring" or "meowing". Thus, generally, based on the relationship condition, different audio tracks may be related to the same audio track or also no audio track may be related to the same audio track.

Further examples of audio games may comprise sequence games (as determined by means of the relationship condition), wherein a first audio track may correspond to the question "What are the first 5 numbers?" and wherein a second audio track related to the first audio track may correspond to the answer "1". However, based on the relationship condition it may be determined that the audio track corresponding to "1" is further related to the audio track corresponding to "2". Thus, the audio track corresponding to "1" may comprise the first audio track for the second audio track corresponding to "2". Thus, a sequence of numbers may be played. Yet further exemplarily, the audio game may comprise an interactive audio story.

The system 1 may comprise an audio playback device 100 configured to send playable data to a speaker 104. In Figure 1, the speaker 104 is depicted as being internal to the audio playback device 100. However, generally, the speaker 104 may be either internal/external to the audio playback device 100. Additionally, or alternatively, the audio playback device 100 may comprise an internal speaker 104 as well as be configured to send playable data to an external speaker 104, by means of an audio out jack, for example. An output power of the speaker may be between 2 and 30 W, preferably between 3 and 25 W, further preferably between 5 and 15 W.

Playable data may be understood, generally, to comprise data that may be used by the speaker 104 to produce sound audible to the human ear. In particular, playable data may comprise a format that may be parsed by the speaker 104 to produce the sound. Playable data may comprise an audio track, or at least a part thereof. Alternatively, or additionally, playable data may comprise notification sounds. Alternatively, or additionally, playable data may comprise voice prompts.

The audio playback device 100 may be configured to receive data related to an audio track. The data related to an audio track may comprise any data that may correspond to an audio track, or at least a part thereof. For example, the data related to an audio track may comprise an (alphanumeric) identifier that may correspond to a defined audio track. Or, the data related to an audio track may comprise a snippet of the audio track, or the whole audio track.

The audio playback device 100 may be configured to send to the speaker 104 playable data corresponding to the audio track, or at least a part thereof. Thus, the audio playback device 100 may be configured to play the audio track.

Alternatively, or additionally, the audio playback device 100 may be configured to receive data related to a relationship condition. The data related to a relationship condition may comprise any data that may be used to determine a second audio track that is related to a first audio track as described above. For example, the data related to a relationship condition may comprise an identifier corresponding to a look-up table that lists, for each audio track (or an identifier thereof), a related audio track (or an identifier thereof). Alternatively, or additionally, the data related to a relationship condition may comprise the look-up table itself.

Further exemplarily, the identifiers of related audio tracks may be assigned based on a relationship function that may accept the identifier of the first audio track and return the identifier of the second audio track related to the first audio track. The relationship function may comprise, based on the nature of the relationship between the first and the second audio tracks, a symmetric function (such that the composition of the function with itself is identity) or an asymmetric function. For example, a simple symmetric function may accept a bit string (string comprising only 0s or 1s) representing an identifier and flip each of the bits (0 to 1 and 1 to 0) to return the related identifier. Other symmetric functions may also be used that may involve performing suitable mirror operations. The data related to a relationship condition may then comprise the relationship function, or an identifier thereof.

The audio playback device 100 may be configured to receive the data related to an audio track and/or a relationship condition from a tag 110. The tag 110 may comprise the data related to an audio track and/or a relationship condition from a tag 110.

The tag 110 may comprise a memory unit configured to store the data related to an audio track and/or a relationship condition. A capacity of the memory unit of the tag 110 may be between 100 and 2000 KB, preferably between 500 and 1500 KB, further preferably between 700 and 1000 KB. However, a capacity of the memory unit may be chosen according to a size of a desired content to be put on to the tag 110. So, for example, in some embodiments, the capacity of the memory unit may also be between 1 and 100 MB, preferably between 5 and 75 MB, further preferably between 10 and 50 MB.

In some embodiments, the memory unit of the tag 110 may be writable such that the data stored in the memory unit may be changed. Preferably, however, the memory unit of the tag 110 may only be readable.

The tag 110 may further comprise a tag communication unit configured to communicate with the memory unit and, in particular, to at least retrieve data from the memory unit. The tag communication unit may be further configured to communicate with the audio playback device 100.

The tag 110 may comprise an active tag such that it may regularly transmit signal(s) to connect with an appropriate reader. Alternatively, the tag 110 may comprise a passive tag such that an appropriate reader may send a signal to the tag 110 to enable communication with the tag 110.

Communication between the tag 110 and the audio playback device 100 may comprise wireless communication, that may be mediated, for example, by electromagnetic radiation. A frequency of the electromagnetic radiation may be between5 and 100 MHz, preferably between 8 and 50 MHz, further preferably between 10 and 30 MHz. For example, the tag 110 may comprise an NFC tag, or an RFID tag.

Alternatively, or additionally, the tag 110 may communicate with the audio playback device 100 over a wired connection. For example, the tag 110, particularly the tag communication unit thereof, may comprise a USB interface and the audio playback device 100 may comprise a corresponding USB port to allow communication with the tag 110. This may be of advantage in increasing an efficiency of data transfer between the tag 110 and the audio playback device 100.

The tag 110 may be further configured to store data related to a plurality of audio tracks such as a first audio track and a second audio track, wherein the second audio track may be related to the first audio track. The audio playback device 100 may be configured to receive the data related to each of the plurality of audio tracks. In such embodiments, a capacity of the memory unit of the tag 110 may be between 1 and 100 MB, preferably between 5 and 75 MB, further preferably between 10 and 50 MB. Further, in such embodiments, it may be understood that the audio playback device 100 may receive data related to each of the plurality of tracks from the tag 110. Further, the data related to a relationship condition may also be received from the tag 110, without the need for another tag 110 comprising the data related to a relationship condition. Such a configuration may be of advantage in increasing the simplicity of the system 1.

The tag 110 may comprise a housing. The housing may be made of any of plastic, wood, rubber, leather, metal, steel, fabric, cloth, and recycled plastic. As may be appreciated, when the communication between the tag 110 and the audio playback device 100 is mediated by electromagnetic waves, metal/steel may not be used. However, when the communication is mediated by a wired/USB connection, for example, metal/steel may also be used. The same holds for a housing 160 of the audio playback device 100 as described further below.

A minimum extension of the housing in any dimension may be between 1 and 10 cm, preferably between 2 and 8 cm, further preferably between 3 and 5 cm. A maximum extension of the housing in any dimension may be between 2 and 20 cm, preferably between 5 and 15 cm, further preferably between 8 and 12 cm.

A ratio between a minimum extension of the housing in any dimension and a maximum extension of the housing in any dimension may be between 0.05 and 0.75, preferably between 0.07 and 0.5, further preferably between 0.1 and 0.3.

The audio playback device 100 may comprise a data reception component 101 configured to receive the data related to an audio track and/or a relationship condition. The data reception component 101 may be configured to receive data from the tag 110. For example, the data reception component 101 may comprise an NFC reader in case of an NFC tag 110, or it may comprise an RFID reader in case of an RFID tag 110. Generally, it may be understood that the reception component 101 may be configured complementary to the tag 110.

The audio playback device 100 may comprise a device data processing unit 102 configured to communicate with the data reception component 101. A capacity of the device data processing unit 102 may be between 25 and 500 MHz, preferably between 50 and 300 MHz, further preferably between 75 and 250 MHz.

The device data processing unit 102 may be configured to send data to the speaker 104. The data may comprise playable data to be played by means of the speaker 104. Alternatively, or additionally, the data may comprise control data relating to a volume of the speaker 104.

The device data processing unit 102 may be further configured to verify the data received from the data reception component 101, or at least a part thereof. Verifying the data may comprise checking the data for completeness, for correctness of format, or any other suitable check to ensure that further processing of the data may be carried out.

The audio playback device 100 may comprise a user interface component 105. The user interface component 105 may be configured to communicate with a user 120 of the system 1. The user interface component 105 may be configured, for example, to accept input from the user 120. The user interface component 105 may be configured to at least send data relating, at least in part, to the communication with the user 120 to the device data processing unit 102. In some embodiments, the user interface component 105 may also be configured to receive data from the device data processing unit 102.

The user interface component 105 may comprise a volume button configured to control a volume of the speaker 104. The volume button may comprise, for example, a knob that may be allowed to rotate, and the rotation of which may be used to control a volume of the speaker 104. The volume button may alternatively, or additionally, comprise a plurality of buttons, such as two buttons. Each of the plurality of buttons may comprise a push button. Pushing of any of the plurality of buttons may result in a change in the volume of the speaker 104. One of the plurality of buttons may be pushed to lower the volume of the speaker 104, while another of the plurality of buttons may be pushed to raise the volume of the speaker 104. Alternatively, or additionally, the volume button may comprise a slider that may be slid to control a volume of the speaker 104.

The user interface component 105 may comprise a toggle button. The toggle button may be configured to toggle a state of the audio playback device 100 between on and off. The toggle button may comprise any of a push button, a switch, a touch-activated button, a voice-activated button or any other suitable button. Preferably, the toggle button may be integrated with the volume button. For example, when the volume button comprises a knob as described above, the state of the audio playback device 100 may be toggled by rotating the knob. Alternatively, or additionally, when the volume button comprises one or more push buttons, one or more of them may be pushed for a duration longer than a threshold duration to toggle the state of the audio playback device 100.

The user interface component 105 may comprise a reset button that may be configured to reset a state of the audio playback device 100. As may be appreciated, a reset may additionally, or alternatively, be carried out by toggling the state of the audio playback device 100.

The audio playback device 100 may comprise a device memory unit 106. The device memory unit 106 may be configured to communicate with the device data processing unit 102. A capacity of the device memory unit 106 may be between 1 and 100 GB, preferably between 4 and 80 GB, further preferably between 7 and 70 GB.

The device memory unit 106 may be configured to store a track database and/or a relationship database. The track database may store a data element associated with an audio track. The track database may also store a plurality of data elements each associated with a distinct audio track. The data element associated with an audio track may comprise data significantly identical to an identifier that may be comprised in the data related to the audio track (and comprised in the tag 110 as described above). Generally, the data element associated with an audio track may comprise data similar to the data related to an audio track, such as an identifier corresponding to the audio track, a snippet of the audio track, or the whole audio track. However, the data element may comprise data that is different from the data related to the audio track as described above.

The data element associated with an audio track may be compared with the data related to an audio track such that a result of the comparison is one of success or failure. In other words, there may exist a function that, for example, takes as input a data element associated with an audio track, and data related to an audio track, and returns true, corresponding to success, if the data element associated with an audio track and the data related to an audio track correspond to each other and false, corresponding to failure, otherwise. Such a function may be made available to the device data processing unit 102.

The relationship database may store a data element associated with a relationship condition. The relationship database may also store a plurality of data elements each associated with a distinct relationship condition. The data element associated with a relationship condition may be significantly identical to an identifier that may be comprised in the data related to the relationship condition (and comprised in the tag 110 as described above). Generally, the data element associated with a relationship condition may comprise data similar to the data related to a relationship condition. However, the data element may comprise data that is different from the data related to the relationship condition as described above.

The data element associated with a relationship condition may be compared with the data related to a relationship condition such that a result of the comparison is one of success or failure. In other words, there may exist a function that, for example, takes as input a data element associated with a relationship condition, and data related to a relationship condition, and returns true, corresponding to success, if the data element associated with a relationship condition and the data related to a relationship condition correspond to each other and false, corresponding to failure, otherwise. Such a function may be made available to the device data processing unit 102.

Thus, generally, it may be understood that the data element associated with an audio track (a relationship condition) and the data related to an audio track (a relationship condition) may be compared with each other to determine if there exists a correspondence between them. This comparison may be carried out in the device data processing unit 102.

The device data processing unit 102 may be further configured to determine a data element associated with a second audio track, wherein the second audio track is related to the first audio track. The determination of the data element associated with the second audio track may be based on a data element associated with a relationship condition and a data element associated with a first track.

For example, the data element associated with the second audio track may comprise an identifier for the second audio track. Further, as described above, the data element associated with a relationship condition may comprise an identifier for a relationship function which may accept the data element (that may comprise, for example, an identifier) for the first audio track and return the data element (that may comprise, for example, an identifier) for the second audio track. The function may, additionally, return a value representative of null/empty if no second data element is found.

The device data processing unit 102 may be configured to send playable data to the speaker 104 representing the result of any of the comparisons described above.

The audio playback device 100 may comprise a source of energy 107 such as a battery. A capacity of the battery may be 1000 and 5000 mAh, preferably between 1500 and 4500 mAh, further preferable between 2000 and 4000 mAh. The battery may be rechargeable. Alternatively, or additionally, the audio playback device 100 may be configured to be connected to a power grid, for example, by means of an electrical socket. Generally, it may be understood that the audio playback device 100 may be configured to draw energy from any known source of energy.

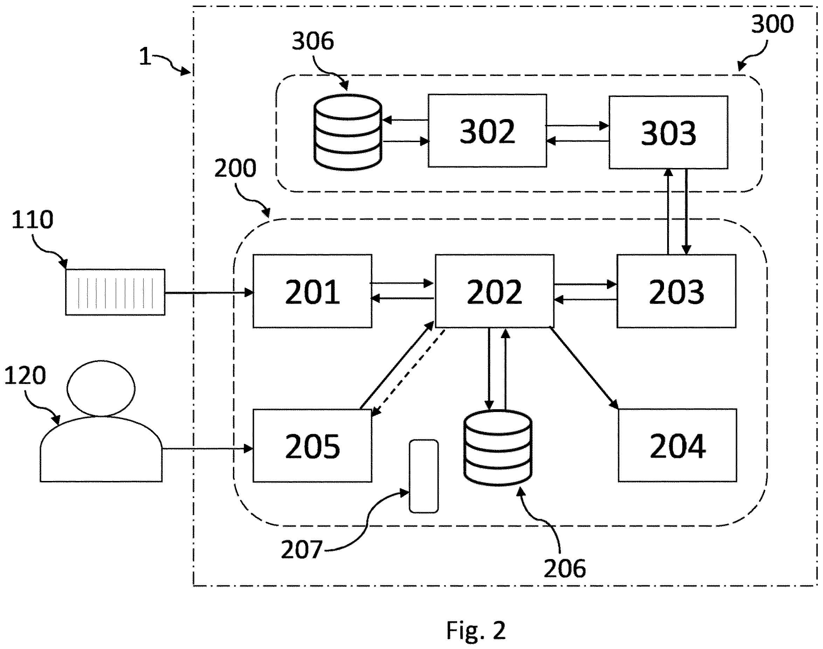

Figure 2 depicts another embodiment of the system 1. The audio playback device 200 may be similar to the audio playback device 100 as depicted in Figure 1, but further comprising a device communication unit 203. The other components of the audio playback device 200 may correspond to the components of the audio playback device 100 described above - a data reception component 201, a device data processing unit 202, a device memory unit 206, a speaker 204, a user interface component 205, and a source of energy 207.

The system 1 may further comprise an external device 300 comprising an external data processing unit 302, an external memory unit 306, and an external communication unit 303. The external memory unit 306 may be configured to communicate with the external data processing unit 302. The external communication unit 303 may be configured to communicate with the external data processing unit 302. The external device 300 may comprise a remote server, a remote computer, or any other suitable data processing system.

The embodiment depicted in Figure 2 may offer similar functionality to the embodiment depicted in Figure 1, as will be described further below, but with some of the tasks carried out by the external device 300 instead of the audio playback device 200. In such embodiments, a ratio of a capacity of the device memory unit 206 and a capacity of the external memory unit 306 may be between 0.0005 and 1, preferably between 0.001 and 0.5, further preferably between 0.005 and 0.2. In such embodiments, a ratio of a capacity of the external data processing unit 302 and the device data processing unit 202 may be between 0.0005 and 1, preferably between 0.001 and 0.5, further preferably between 0.002 and 0.2.

The external memory unit 306 may be configured to store a track and/or relationship database as described above. The external data processing unit 302 may be configured to carry out, at least some of, the comparisons between data elements associated with an audio track (a relationship condition) and data related to an audio track (a relationship condition).

The external communication unit 303 may be configured to communicate with the device communication unit 203. The communication between the external device 300 and the audio playback device 200 may comprise wireless communication that may be mediated, for example, by electromagnetic waves. A frequency of the electromagnetic waves may be between 1 and 10 GHz, preferably between 1.5 and 5 GHz, further preferably between 2 and 4 GHz.

Additionally, or alternatively, the communication may comprise a wired communication. For example, the audio playback device 200 may be connected to a computer/mobile phone/tablet 300 by means of a USB cable. Generally, any suitable wired connection may be used. In such embodiments, the track and/or relationship databases and the functionality for comparing data elements to data as described above may be downloaded to the computer computer/mobile phone/tablet 300, for example.

A method for playing audio games as described above using embodiments of the system 1 will now be described.

In a first step, the audio playback device 100/200 may be switched on by means of the user interface component 105/205. The audio playback device 100/200 may be configured to play, by means of the speaker 104/204, a sound representing the switching on/off of the audio playback device 100/200.

Next, the audio playback device 200, particularly the device data processing unit 202 thereof, may be configured to then determine a state of the device communication unit 203. If the device communication unit 203 is determined to be active, corresponding to being connected to the external communication unit 303, the audio playback device 200 may be configured to query the external device 300 for available updates, particularly to the firmware of the audio playback device 200. Updates, if any, may then be downloaded and installed. An appropriate notification for the same may be played by means of the speaker 204.

The audio playback device 100/200, particularly the data reception component 101/201 thereof, may then receive, from a tag 300, data related to a relationship condition. This may be of advantage in determining the kind of game to be played and, thus, in determining related data elements. The audio playback device 100/200 may play a notification representative of the received data related to a relationship condition. The data reception component 101/201 may then send the data related to a relationship condition to the device data processing unit 102/202.

The device data processing unit 102/202 may then compare the data related to a relationship condition with each of the data elements stored in the relationship database in the device memory unit 106/206. As described above, the result of the comparison may be success or failure. The audio playback device 100/200 may play a sound representing the result of the comparison.

If the result is failure, the audio playback device 200 may send the data related to a relationship condition to the device communication unit 203, for further querying the relationship database in the external memory unit 306. This may be accomplished by sending the data related to a relationship condition to the external communication unit 303 and, from there, further to the external data processing unit 302. In particular, the device memory unit 206 may not store the relationship database, and querying the external memory unit 306 may be preferable. Then, the audio playback device 100/200 may be configured to wait for a tag 300 comprising the first data related to a first audio track.

If the result is success, the audio playback device 100/200 may be configured to wait for a tag 300 comprising first data related to a first audio track.

Then, a tag 300 comprising first data related to a first audio track may be received by the audio playback device 100/200, particularly the data reception component 101/201 thereof. The data reception component 101/201 may send this first data to the device data processing unit 102/202. The device data processing unit 102/202 may then compare the first data with each data element stored in the device memory unit 106/206. A result of this comparison may be one of success or failure. If the result is success, the device data processing unit 102/202 may determine a first data element, the first data element being the data element comparing successfully with the first data. The audio playback device 100/200 may be configured to play a notification representing the result of the comparison.

If the result is failure, the audio playback device 200 may send the first data to the external device 300, via the communication units 203 and 303. The external data processing unit 302 may be configured to compare the data related to a relationship condition with each of the data elements in the relationship database stored in the external memory unit 306. A result of the comparison may be one of success or failure. If the result is failure, a notification may be sent to the audio playback device 200 and the audio playback device 200 may have to be reset to re-play a game. If the result is success, the external data processing unit 302 may compare the first data with each of the data elements in the track database stored in the external memory unit 306. A result of the comparison may be one of success or failure. If the result is failure, a notification may be sent to the audio playback device 200 and the audio playback device 200 may prompt for new first data relating to a first audio track. If the result is success, the external data processing unit 302 may determine a first data element, the first data element being the data element comparing successfully with the first data. Further, if the result is success, the external data processing unit 302 may determine based, at least in part, on the data related to a relationship condition, a second data element related to the first data element, the second data element being associated with a second audio track related to the first audio track, and send the second data element to the audio processing device 200.

If the result is success, the device data processing unit 102/202 may determine based, at least in part, on the data related to a relationship condition, a second data element related to the first data element, the second data element being associated with a second audio track related to the first audio track. Thus, generally, it may be understood that the device data processing unit 102/202 may comprise a data element associated with a second audio track related to the first audio track in accordance with the relationship condition.

Further, if the result is success, the audio playback device 100/200 may prompt for second data relating to an audio track. The prompt may comprise activating the data reception component 101/201. Further, a notification sound representing the activation of the data reception component 101/201 may be generated.

The user 120 may then provide second data related to an audio track to the audio playback device 100/200. The data reception component 101/201 may receive the second data and send it to the device data processing unit 102/202. The device data processing unit 102/202 may compare the second data to the second data element associated with the second audio track related to the first audio track, determined as described above. A result of this comparison may be one of success or failure.

If the result is success, the audio playback device 100/200 may be configured to play the second audio track.

If the result is failure, the audio playback device 100/200 may be configured to play a notification representing the failed comparison. Further, the audio playback device 100/200 may be configured to prompt for the second data again. Alternatively, the audio playback device 100/200 may have to be reset and a new game be started.

While the above disclosure has described one embodiment of a method for playing an audio game using the system 1 as described above, it may be understood that other variations of the method involving different/additional data transfers, for example, may also be comprised by the present invention. For example, the audio tracks corresponding to any of the data elements associated with an audio track, if not available in the device memory unit 106/206, may be downloaded from the external device 300.

Further, any of the data transfers between the audio playback device 100/200 and the external device 300 may be encrypted.

Further, when any of the comparisons above are made with an empty set (for example, because there is no data in the respective memory unit or when there are no related data elements based on a defined relationship condition), the result may be a failure. In particular, when an empty set is detected, the system 1 may be configured to play a defined notification representative of an empty set having been detected. For example, this may be implemented if determining the second data element described above returns no result.

Further, a result of failure in any of the comparisons described above may or may not result in the audio playback device 100/200 having to be reset. Alternatively, the audio playback device 100/200 may be configured to prompt for the data again.

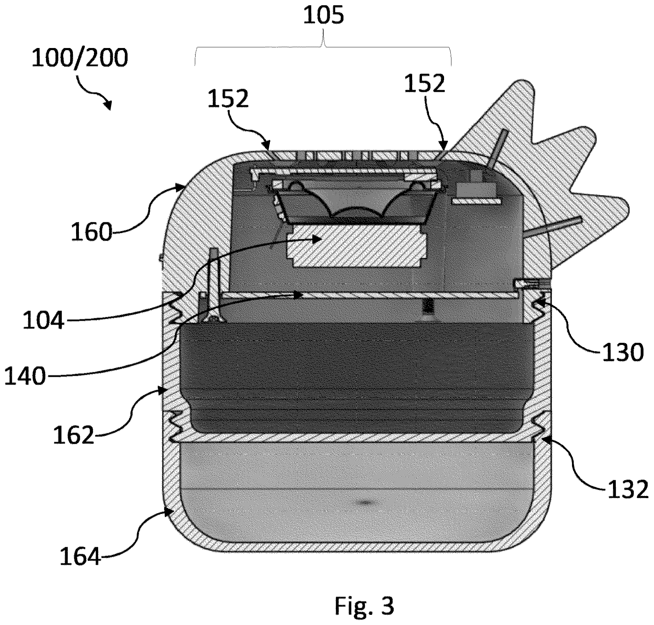

Figure 3 depicts a cross-sectional view of an exemplary audio playback device 100/200. The audio playback device 100/200 may comprise a housing 160 that may be made of any of plastic, rubber, metal, steel, wood, fabric, cloth, and recycled plastic. The speaker 104 may be housed inside the housing 160. The section 140 may comprise, for example a PCB board comprising the device data processing unit 102/202, and the device memory unit 106/206. The user interface component 105 may be comprised by the LEDs 152.

The housing 160 may comprise a connection element 130 that may allow the audio playback device 100/200 to be connected to a tag storage section 164. The connection element 130 has been depicted as comprising threads. However, the connection element 130 may comprise and of a bayonet, a friction-based, a clip-based, or a magnet-based connection element. The tag storage section 164 may be particularly advantageous for storing one or more of the tags 300 as described above.

The tag storage section 164 may comprise a connection element 132 significantly complementary to the connection element 130 of the housing 160. This may allow the tag storage section 164 to easily connect to the housing 160.

Another embodiment 162 of the tag storage section is depicted in Figure 3. In this embodiment, the tag storage section 162 may comprise a plurality of connection elements 132, one of which may be complementary to the connection element 130 of the housing 160, while another of which may be significantly identical to the connection element 130 of the housing 160. This may allow a plurality of tag storage sections 162 to be connected to the housing 160, as depicted in Figure 3.

The tag storage sections 162/164 as described above may be of significant advantage in storing tags 300 relating to audio tracks/relationship conditions of varying complexity. For example, a lowest storage section may store tags 300 of a lowest complexity, while higher storage sections may store tags 300 of a higher complexity.

Overall, embodiments of the present technology thus aim to provide a system and a method for playing audio games.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

While in the above, preferred embodiments have been described with reference to the accompanying drawings, the skilled person will understand that these embodiments were provided for illustrative purpose only and should by no means be construed to limit the scope of the present invention, which is defined by the claims.

## Claims

1. A tag configured for use with an audio playback device, wherein the tag comprises data related, at least in part, to an audio track and/or data related, at least in part, to a relationship condition.

2. An audio playback device configured to send playable data to a speaker, wherein the audio playback device is configured to receive data related, at least in part, to an audio track.

3. The audio playback device according to the preceding claim, wherein the audio playback device is configured to receive data related, at least in part, to a relationship condition.

4. A system for playing an audio game comprising an audio playback device configured to send playable data to a speaker, wherein the system is configured:
to receive first data related to a first audio track,
to play, by means of the speaker, the first audio track, and,
to prompt for second data related to an audio track.

5. The system according to the preceding claim, wherein the audio playback device comprises an audio playback device according to any of the claims 2 to 3.

6. The system according to any of the two preceding claims, wherein the system is configured to receive the second data, and wherein the system is configured to determine if the audio track is related to the first audio track.

7. The system according to any of the claims 4 to 6, wherein the system is configured to further receive data related to a relationship condition.

8. The system according to the preceding claim, wherein determining if the audio track is related to the first audio track is based, at least in part, on the data related to a relationship condition.

9. The system according to any of the three preceding claims, wherein a result of the determination is one of success, corresponding to the audio track being related to the first audio track, or failure, corresponding to the audio track not being related to the first audio track.

10. The system according to the preceding claim, wherein the system is configured, in response to the result being success, to play the audio track.

11. The system according to any of the claims 4 to 10, wherein the system is configured to receive a tag comprising the first (the second) data related to a first (an) audio track.

12. The system according to any of the preceding claims 4 to 11 and with the features of claim 7, wherein the system is configured to receive a tag comprising the data related to a relationship condition.

13. The system according to any of the two preceding claims, wherein the tag comprises a tag according to claim 1.

14. A method for playing an audio game using an audio playback device configured to send playable data to a speaker, wherein the method comprises:
receiving first data related to a first audio track,
playing, by means of the speaker, the first audio track, and,
prompting for second data related to an audio track.

15. The method according to the preceding claim, wherein the method comprises receiving the second data, and wherein the method comprises determining if the audio track is related to the first audio track.
